# EUROPÄISCHE PATENTANMELDUNG

(11) **EP 1 405 741 A1**
(43) Veröffentlichungstag der Anmeldung: **07.04.2004**
(21) Anmeldenummer: 03018070.7
(22) Anmeldetag: 08.08.2003
(51) Int. Cl.: B60G 21/05, B60B 35/08

(54) **Verbundlenkerachse**

(30) Priorität: 01.10.2002 DE 20215220 U
(71) Anmelder: Benteler Automobiltechnik GmbH, 33104 Paderborn (DE)
(72) Erfinder: Mirabile, Salvatore, 33397 Rietberg (DE); Leontaris, Georgios, 33105 Paderborn (DE); Hutabarat, Goddy, 33103 Paderborn (DE)
(74) Vertreter: Ksoll, Peter, Dr.-Ing.

(57) **Zusammenfassung**

Die Erfindung betrifft eine Verbundlenkerachse (1) für Kraftfahrzeuge. Die Verbundlenkerachse (1) umfasst zwei radführende Längslenker (2, 3) und einen die beiden Längslenker (2, 3) verbindenden Querträger (4). Der Querträger (4) besteht aus einem Profil mit einem einlagigen bereichsweise offenen Mittelabschnitt (5), an den sich jeweils beidseitig rohrförmig geschlossene Enden (6, 7) anschließen. Der Mittelabschnitt (5) weist einen ovalen langgestreckten Ausschnitt (8) auf, wobei die im Querschnitt über den Umfang gemessene Schenkellänge (L) im Mittelabschnitt (5) von den Enden (6, 7) ausgehend zur Mitte (M) des Querträgers (4) hin kontinuierlich abnimmt. In der Mitte (M) besitzt der Querträger (4) einen halbkreisförmigen Querschnitt mit einem Umfangswinkel α von 180°.

## Beschreibung

Die Erfindung betrifft eine Verbundlenkerachse für Kraftfahrzeuge gemäß den Merkmalen im Oberbegriff von Schutzanspruch 1.

Verbundlenkerachsen zeichnen sich durch einen fahrzeugspezifisch einfachen Aufbau bei geringem Raumbedarf und guten kinematischen Eigenschaften aus. Der die beiden seitlichen Längslenker verbindende Querträger wirkt als Torsionsprofil, so dass sich bei gleichzeitigem Einfedern eine Längslenkercharakteristik und bei wechselseitigem Einfedern eine Schräglenkercharakteristik ergibt.

Aus der DE 199 49 341 A1 ist eine Verbundlenkerachse für Kraftfahrzeuge bekannt, welche zwei durch einen Querträger verbundene Längslenker umfasst. Der Querträger besteht aus einem Profil mit einem einlagigen, bereichsweise offenen Mittelabschnitt, an den sich beidseitig rohrförmig geschlossene Enden anschließen.

Bei dieser Bauart konzentrieren sich jedoch die im Fahrbetrieb auftretenden Hauptspannungen in den Übergangsbereichen zwischen den Enden und dem offenen Mittelabschnitt, also zur freien Torsionslänge hinter dem Anbindungsbereich zu den Längslenkern. Dies beeinträchtigt die Lebensdauer des Querträgers bei Torsionsbelastung und damit der gesamten Verbundlenkerachse.

Der Erfindung liegt ausgehend vom Stand der Technik die Aufgabe zugrunde, eine Verbundlenkerachse hinsichtlich der Lebensdauer bei Gewährleistung einer hohen Leistungsfähigkeit zu verbessern.

Die Lösung dieser Aufgabe besteht in einer Verbundlenkerachse gemäß Schutzanspruch 1, bei der der Ausschnitt im Mittelabschnitt oval langgestreckt ist und die über den Umfang gemessene Schenkellänge des Querträgers in Längsrichtung jeweils von den Enden ausgehend zur Mitte hin kontinuierlich abnimmt. In der Mitte besitzt der Querträger einen halbkreisförmigen Querschnitt mit einem Umfangswinkel von 180°. Der Ausschnitt wird folglich ausgehend von den geschlossenen Endabschnitten einem vorzugsweise gleichmäßigen und symmetrischen Konturverlauf folgend zur Mitte hin größer.

Durch diese Ausgestaltung des Querträgers werden die Materialspannungen aus dem für die Lebensdauer der Verbundlenkerachse kritischen Bereich in den Übergängen in den mittleren Bereich verlagert, welcher für die Lebensdauer unkritischer ist. Des Weiteren können die Hauptspannungen hinter der Materialkante konzentriert werden.

Die Gesamtkonfiguration der neuerungsgemäßen Verbundlenkerachse gewährieistet eine effiziente Überleitung der Torsions- und Biegekräfte von den Längslenkern in den als Torsionsprofil wirkenden Querträger, wo die Materialspannungen abgebaut bzw. kompensiert werden. Durch die belastungsgerechte Konfiguration des Querträgers besitzt die Verbundlenkerachse ein besonders gutes statisches und dynamisches Spannungsverhalten und erreicht eine hohe Lebensdauer.

Eine Steifigkeitsanpassung der Verbundlenkerachse kann je nach Fahrzeugtyp über eine Verdrehung des Querträgers erfolgen. Da der Querschnitt der Enden vorzugsweise rund gestaltet ist, ist es möglich, den Querträger ohne Änderung des Bauteils als solches beim Zusammenbau zu verdrehen, um je nach Fahrzeugvariante die Fahreigenschaften zu verändern. Auf diese Weise kann eine rotatorische Ausrichtung des Querträgers bzw. der mittig durch die Schenkel des Mittelabschnitts verlaufenden Mittellängsachse in Bezug auf die durch die Längslenker verlaufenden Längsachsen erfolgen. Der Querträger ermöglicht eine Variation der Parameter bezüglich seiner Gravitationsachse zum Wankzentrum des Kraftfahrzeugs. Dementsprechend können die spezifischen Fahreigenschaften des Kraftfahrzeugs hinsichtlich der Rollsteifigkeit sowie der Verstellung von Spur und Sturz am Radflansch gezielt beeinflusst werden, ohne dass eine signifikante Bauteiländerung notwendig ist.

Vorteilhafterweise ist der Querträger gemäß den Merkmalen von Schutzanspruch 2 einstückig aus einer ebenen Platine gefertigt, deren Geometrie der Abwicklung des Querträgers entspricht.

Zur Herstellung eines Querträgers wird zunächst eine ebene Platine gefertigt mit der notwendigen Geometrie, das heißt rechteckförmigen Endabschnitten und bogenförmig verlaufenden Einschnitten an den Längsseiten. Anschließend wird die Platine rohrförmig umgeformt und die dann aneinander liegenden Längskanten der Enden des Querträgers schweißtechnisch gefügt. Nachdem die Platine zum Rohr verschweißt ist, ist der Querträger fertig. Anschließend kann dieser endseitig mit den Längslenkern gefügt werden.

Die Herstellung des Querträgers ist rationell und sehr gut zu automatisieren. Die Fertigung der Verbundlenkerachse kommt mit wenigen Schritten aus. Insgesamt ist die erfindungsgemäße Verbundlenkerachse kostengünstig.

Die Erfindung ist nachfolgend anhand eines in den Zeichnungen dargestellten Ausführungsbeispiels beschrieben. Es zeigen:
- Figur 1: in perspektivischer Darstellungsweise eine erfindungsgemäße Verbundlenkerachs und
- Figur 2: einen Schnitt durch die Darstellung der Figur 1 in der Mitte des Querträgers.

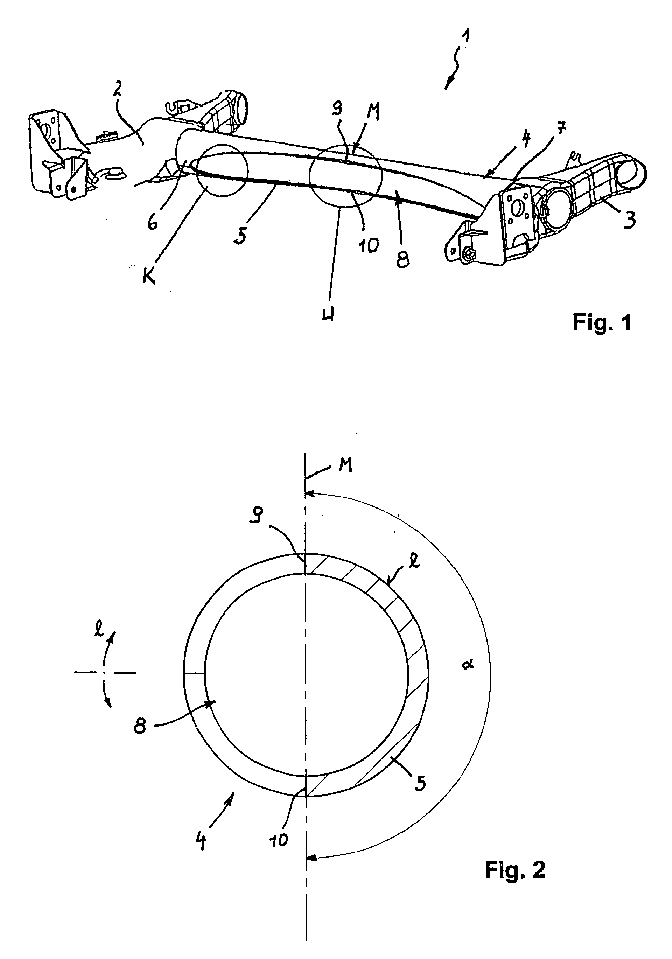

Figur 1 zeigt eine Verbundlenkerachse 1 in perspektivischer Darstellungsweise. Die Verbundlenkerachse 1 umfasst im wesentlichen zwei radführende Längslenker 2, 3 und einen die beiden Längslenker 2, 3 verbindenden Querträger 4. Der Querträger 4 besteht aus einem Profil mit einem einlagigen bereichsweise offenen Mittelabschnitt 5, an den sich jeweils beidseitig rohrförmig geschlossene Enden 6, 7 anschließen.

Der Mittelabschnitt 5 weist einen ovalen langgestreckten Ausschnitt 8 auf, wobei die im Querschnitt über den Umfang gemessene Schenkellänge 1 im Mittelabschnitt 5 von den Enden 6, 7 ausgehend zur Mitte M des Querträgers 4 hin kontinuierlich abnimmt. Wie die Figur 2 verdeutlicht, besitzt der Querträger 4 in der Mitte M einen halbkreisförmigen Querschnitt mit einem Umfangswinkel α von 180°.

Die Geometrie des Querträgers 4 ist abgestimmt auf die im Kraftfahrzeug zu erwartenden Belastungen. Durch die erfindungsgemäße Gestaltung des Querträgers 4 bzw. des Ausschnitts 8 werden die Materialspannungen aus dem für die Lebensdauer der Verbundlenkerachse 1 kritischen Bereich K in den Obergangsbereichen in den mittleren Bereich U verlagert. Dieser Bereich U ist, was die Lebensdauer anbelangt, unkritischer als die Übergangsbereiche. Dies gilt insbesondere, wenn die Hauptspannungen durch die Geometrie des Ausschnitts 8 hinter die Materialkanten 9, 10 des Mittelabschnitts 5 im Bereich U konzentriert werden können. Maßgebend hierfür ist ein halbkreisförmiger Querschnitt in der Mitte M des Querträgers 4 mit einem Umfangswinkel α von 180°.

Gefertigt ist der Querträger einstückig aus einer anfangs ebenen Platine, deren Geometrie der Abwicklung des Querträgers 4 entspricht. Die entsprechend zugeschnittene Platine wird rohrförmig umgeformt und entlang der dann aneinander liegenden Längskanten an den Enden 6, 7 gefügt.

### Bezugszeichenaufstellung

- 1 -: Verbundlenkerachse
- 2 -: Längslenker
- 3 -: Längslenker
- 4 -: Querträger
- 5 -: Mittelabschnitt
- 6 -: Ende v. 4
- 7 -: Ende v. 4
- 8 -: Ausschnitt
- 9 -: Materialkante
- 10 -: Materialkante

- M -: Mitte v. 4
- I -: Schenkellänge
- K -: kritischer Bereich
- U -: unkritischer Bereich

- α -: Umfangswinkel

## Patentansprüche

1. Verbundlenkerachse für Kraftfahrzeuge, welche zwei durch einen Querträger (4) verbundene Längslenker (2, 3) aufweist, wobei der Querträger (4) aus einem Profil besteht mit einem bereichsweise offenen Mittelabschnitt (5) mit einem langgestreckten Ausschnitt (8) und sich an den Mittelabschnitt (5) beidseitig rohrförmig geschlossene Enden (6, 7) anschließen, **dadurch gekennzeichnet, dass** der Ausschnitt (8) oval langgestreckt ist und die im Querschnitt über den Umfang gemessene Schenkellänge (I) des Querträgers (4) im Mittelabschnitt (5) von den Enden (6, 7) ausgehend zur Mitte (M) des Querträgers (4) hin kontinuierlich abnimmt, wobei der Querträger (4) in der Mitte (M) einen halbkreisförmigen Querschnitt mit einer Umfangswinkel (α) von 180° besitzt.

2. Verbundlenkerachse nach Anspruch 1, dadurch **gekennzeich**n e t, dass der Querträger (4) einstückig aus einer ebenen Platine gefertigt ist, deren Geometrie der Abwicklung des Querträgers (4) entspricht.
